# EUROPEAN PATENT APPLICATION

(11) **EP 0 777 242 A2**
(43) Date of publication of application: **04.06.1997**
(21) Application number: 96119048.5
(22) Date of filing: 28.11.1996
(51) Int. Cl.: H01G 4/232

(54) **A ceramic electronic component and its manufacturing method**

(30) Priority: 29.11.1995 JP 310185/95; 30.09.1996 JP 259809/96
(71) Applicant: MATSUSHITA ELECTRIC INDUSTRIAL CO., LTD, Kadoma-shi, Osaka 571 (JP)
(72) Inventor: Hashimoto, Emiko, Amagasaki-shi, Hyogo 661 (JP); Washizaki, Tomoyuki, Neyagawa-shi, Osaka 572 (JP); Tanahashi, Masakazu, Osaka-shi, Osaka 545 (JP)
(74) Representative: Flaccus, Rolf-Dieter, Dr.

(57) **Abstract**

A ceramic electronic part comprising an inner electrode containing Ni as a main metal component, and an outer electrode comprising a sintered body of a metal component containing Ag and Cu as a main component and a glass component. The ceramic electronic part having an excellent bonding property and the high reliability can be provided by forming a boundary, between an outer electrode and an inner electrode with an alloy phase comprising Ni and Cu as a main component. The ceramic electronic part is manufactured by the following steps: the metal comprising Cu and Ag as a main component is employed for the outer electrode; the metal for an outer electrode is and softened in an atmosphere of low oxygen partial pressure at the temperature of 500-800°C. As a result, an outer electrode 3 is provided where an entire body is formed by an alloy phase 6 comprising Cu-Ag as a main component and an alloy phase 5 comprising Ni-Cu as a main component is formed at the boundary contacting with a Ni inner electrode. Consequently, an outer electrode 3 can be sintered at a low temperature, thus inhibiting the deterioration in the electric property due to the deoxidation of the ceramic component. Moreover, the production cost of outer electrodes can be reduced.

## Description

The present invention relates to a ceramic electronic device such as a multilayer ceramic capacitor, a multilayer varistor, a dielectric resonator, a piezo-electric device or the like and a method for manufacturing the same. More specifically, the present invention relates to a ceramic electronic part comprising an outer electrode and an inner electrode having Ni as a main component, and a method for manufacturing the same.

Conventionally, for a ceramic electronic part having an inner electrode comprising Ni as a main component (hereinafter Ni inner electrode will be used), an outer electrode manufactured by sintering a metal coating material including only Cu powder as a metal component (hereinafter, Cu outer electrode will be used) has been generally used. The reason for this is that Ni and Cu can form a solid solution in all percentages so that Ni and Cu are likely to be bound each other. In other words, a joining between an inner electrode and an outer electrode can easily be formed. Moreover, the melting point of Cu is 1083 °C. In case of such high melting temperature, in order to achieve the excellent condition of sintering bond between a Ni inner electrode and a Cu outer electrode (in other words, the boundary portion between a Cu outer electrode and a Ni inner electrode) and inside a Cu outer electrode, a firing temperature is required be higher than 800°C. Moreover, it is also required that sintering should be carried out in an atmosphere of a low oxygen partial pressure so as to prevent the sintering bond from an obstruction due to the oxidation. On the other hand, if a ceramic electronic part (a ceramic device) is exposed to a low oxygen partial pressure at a high temperature, the ceramic component is deoxidized, occasionally deteriorating the property of a ceramic electronic part. Therefore, extreme care has been necessary in forming the outer electrode.

As described above, in forming an outer electrode of a ceramic electronic part having a Ni inner electrode manufactured by sintering a coating film comprising Cu powder, Cu and Ni are easily oxidized in air. Consequently, in order to inhibit the oxidation, a coating film of an outer electrode is required to be sintered in an atmosphere of a low oxygen partial pressure. In general, sintering is conducted in an N₂ atmosphere. The N₂ atmosphere for an industrial use contains a small amount of oxygen and the oxygen partial pressure reaches to several ppm. However, a binder or Cu powder per se contained in the coating film consumes a small amount of oxygen in an atmosphere of N₂ for the burning or oxidation before sintering. Consequently, the actual atmosphere during sintering is extremely low oxygen partial pressure. As a result, a ceramic component (a ceramic device) may be deoxidized.

In order to inhibit deoxidation of ceramic in an atmosphere of a low oxygen partial pressure, it is required that the firing temperature during the formation of an electrode be as low as possible, so that the deoxidation rate become slow. However, if a coating film of the conventional coating material for forming an outer electrode, in other words a coating film comprising a metal coating material using only Cu powder as a metal powder, is fired at a low temperature, the sintering condition of the outer electrode per se is deteriorated. Moreover, the degree of bonding to a Ni inner electrode is not sufficient. As a result, the electric property is deteriorated as well.

A multilayer ceramic capacitor manufactured by firing an outer electrode in an air atmosphere is suggested in Japanese Laid Open Patent No. Tokkai-Hei 2-150010. However, in this method, an alloy phase cannot be obtained at the boundary between an outer electrode and an inner electrode. Consequently, it is difficult to integrate an outer electrode and inner electrode. Designed capacitance cannot be extracted stably. Moreover, the method for making a melting condition and manufacturing the outer electrode by firing an alloy containing high quantity of Cu (the ratio of Cu to Ag is 100:1 to 100:40) at a temperature of not less than 900°C is suggested in Japanese Laid Open Patent No. Tokkai-Hei 2-248020. However, according to this method, since an alloy is sintered at the high temperature, a ceramic component is deoxidized. Consequently, the insulating resistance is reduced and/or the electronic property is deteriorated after being used long time.

The object of the present invention is to provide a ceramic electronic part comprising an outer electrode and a Ni inner electrode and a method for manufacturing the same. The ceramic electronic part of the present invention can be provided by sintering the ceramic device without deoxidation of the ceramic and by integrating the Ni inner electrode and outer electrode with excellent binding.

In order to achieve the above-mentioned object, the ceramic electronic part of the present invention comprises an inner electrode comprising Ni as a main metal component and an outer electrode attached to an outer side face of the ceramic electronic part. The above-mentioned outer electrode is a sintered body comprising a metal component containing Ag and Cu as a main component and a glass component. The boundary between the outer electrode and the inner electrode is formed with an alloy phase comprising Ni and Cu as a main component.

It is preferable in the above-mentioned electronic ceramic part that the outer electrode consists of Ag and Cu as a metal component, and has the boundary contacting the inner electrode formed with an alloy phase consisting of Ni and Cu.

It is preferable in the above-mentioned electronic ceramic part that the outer electrode comprises Ag and Cu as a main component and at least one metal component selected from metal components that alloy with each of Ag and Cu and of which the alloy with each of Ag and Cu has a lower melting point than each melting point of Ag and Cu as the other component, and has the boundary contacting the inner electrode formed with an alloy phase comprising Ni and Cu.

It is preferable in the above-mentioned electronic ceramic part that the outer electrode comprises Ag and Cu as a main component and at least one metal component selected from metal components that alloy with each of Ag and Cu and of which the alloy with each of Ag and Cu has a lower melting point than each melting point of Ag and Cu as the other component, and has the boundary contacting the inner electrode formed with an alloy phase comprising Ni, Cu and the above-mentioned other metal component.

It is preferable in the above-mentioned electronic ceramic part that a metal component of the outer electrode comprises Ag and Cu as a main metal component and at least one component selected from the group consisting of Bi, Ce, Ga, In, Pb, Sn and Zn as the other component.

It is preferable in the above-mentioned electronic ceramic part that the weight ratio of Ag to Cu in the outer electrode is in the range of 1:99 to 99:1.

It is preferable in the above-mentioned electronic ceramic part that the weight ratio of Ag to Cu in the outer electrode is in the range of 3:7 to 9:1.

It is preferable in the above-mentioned electronic ceramic part that the weight ratio of the metal component which is contained as the other metal component is not less than 0.001 with respect to the total amount of Ag and Cu.

It is preferable in the above-mentioned electronic ceramic part that a sintered body of the outer electrode comprises inorganic oxide particle which is not bound to the metal component and which retains its initial particle shape from the time of mixing of particles.

It is preferable in the above-mentioned electronic ceramic part that the inorganic oxide particle is flake-shaped.

It is preferable in the above-mentioned electronic ceramic part that the flake-shaped inorganic oxide particle is at least one powder selected from the group consisting of mica powder and clay powder comprising montmorillonite powder as a main component.

It is preferable in the above-mentioned electronic ceramic part that the sintered body of the outer electrode comprises a metal component in an amount of 60-97 weight % and the glass component in an amount of 3-40 weight %.

It is preferable in the above-mentioned electronic ceramic part that the inner electrode comprises Ni in an amount of 90-100 weight % and the other metal component in an amount of 0-10 weight %.

It is preferable in the above-mentioned electronic ceramic part that the other metal component of the inner electrode comprises at least one metal selected from the group consisting of Fe, Co, Cu, and Cr.

According to another aspect of the present invention, there can be provided a method for manufacturing a ceramic electronic part, which comprises the steps of forming a coating film by applying a coating material comprising at least one metal powder selected from the group consisting of a metal powder in which Ag powder and Cu powder are mixed, a metal powder comprising a Cu-Ag alloy, a metal powder comprising Cu powder whose surface is coated with Ag, and a metal powder comprising Ag whose surface is coated with Cu; a glass frit; and an organic material for a binder onto the outer side face of the ceramic electronic part, and then firing the coating film at the temperature of 500-800°C in an atmosphere of low oxygen partial pressure.

It is preferable in the above-mentioned method that the coating material contains at least one powder selected from the group consisting of metal powder and metal oxide powder which has at least one metal component selected from metal components that alloy with each of Ag and Cu and of which the alloy with each of Ag and Cu has lower melting point than each melting point of Ag and Cu as the other additive.

It is preferable in the above-mentioned method that the coating material comprises at least one metal powder selected from the group consisting of Bi, Ce, Ga, In, Pb, Sn and Zn as the other additive.

It is preferable in the above-mentioned method that the coating material comprises at least one oxide powder of the metal selected from the group consisting of In, Bi, Sn and Pb as the other additive.

It is preferable in the above-mentioned method that the weight ratio of Ag to Cu in the metal powder is in the range of 1:99 to 99:1.

It is preferable in the above-mentioned method that the weight ratio of Ag to Cu in the metal powder is in the range of of 3:7 to 9:1.

It is preferable in the above-mentioned method that the weight ratio by metal conversion of the other component of at least metal powder selected from the group consisting of a metal powder and a metal oxide powder which is added into Ag and Cu is not less than 0.001 with respect to the total amount of Ag and Cu.

It is preferable in the above-mentioned method that the coating material comprises inorganic oxide particle having a softening point of not less than 900°C.

It is preferable in the above-mentioned method that the inorganic oxide particle is flake-shaped.

It is preferable in the above-mentioned method that the flake-shaped inorganic oxide particle is at least one powder selected from the group consisting of mica powder and clay powder comprising montmorillonite powder as a main component.

It is preferable in the above-mentioned method that the sintered body of the outer electrode comprises a metal component in an amount of 60-97 weight % and the glass component in an amount of 3-40 weight %.

It is preferable in the above-mentioned method that the inner electrode contains Ni in an amount of 90-100 weight % and the other metal component in an amount of 0-10 weight %.

It is preferable in the above-mentioned method that the other metal component of the inner electrode comprises at least one metal selected from the group consisting of Fe, Co, Cu and Cr.

It is preferable in the above-mentioned method that an atmosphere of a low oxygen partial pressure at the time of firing of the outer electrode is not less than 0ppm and not more than 1000ppm. The more preferable partial pressure is in the range of 0-500ppm.

The ceramic electronic part of the present invention is manufactured by the above-mentioned method. As a material for the outer electrode, the coating material comprising Cu which is likely to alloy with Ni of the Ni inner electrode, a metal material comprising Ag which can alloy with Cu and which decreases the alloying temperature of Ni and Cu, and a glass material is used so that an outer electrode having a excellent sintering condition and the bonding property with the Ni inner electrode can be obtained even when sintered even at the low temperature of 500-800°C. Moreover, an outer electrode having the further excellent sintering condition and the bonding property with the Ni inner electrode is obtained by adding the metal materials such as Bi, Ce, Ga, In, Pb, Sn, and Zn or the like into the materials for the outer electrode.

The formation mechanism of the outer electrode of the present invention will be explained as follows.

Ag and Cu have an eutectic point at the temperature of 779°C so that a liquid phase is generated around 779°C if Ag powder and Cu powder are mixed. However, a part of Ag and Cu starts to bond below the temperature of the eutectic point and forms a material which lowers the melting point. And from the point, as a starting point, the bonding is further promoted and the eutectic material of Ag and Cu is further formed. Therefore, the sintering property of the metal is seen at lower temperatures when compared with the sintering property of Cu itself. Actually, the entire outer electrode is sintered below the temperature of the eutectic point of Ag-Cu.

On the other hand, the eutectic alloy composition (an eutectic material of Ag and Cu) is soft because the softening point decreases, so easily shifts to the surface of Ni inner electrode. As a result, the alloying of Ni and Cu is promoted from the Ni surface by using this eutectic material as a medium and an alloy is formed. Ag plays a role in carrying Cu to the Ni surface without inhibiting the bonding of Ni and Cu. Consequently, the alloy of Ni and Cu can easily be formed at a lower temperature than the case where only Cu is employed as the conventional metal material and the excellent bonding condition of the inner electrode and the outer electrode can be provided.

By the same mechanism, the metal such as Bi, Pb, Sn and Zn or the like that alloy with Ag and Cu and of which the alloy with Ag and Cu soften at a lower temperature is added into the materials for the outer electrode, an alloy of Ni and Cu can be formed at a lower temperature. Occasionally, the excellent condition between an inner electrode and an outer electrode can be provided by forming an alloy of Ni, Cu and additive metal elements.

Herein, Bi, In, Sn, and Pb or the like may be added in the form of a metal component and also may be added in the form of an oxide. The reason for this will be explained as follows. These oxides are easily deoxidized into the metal through the burning of a binder which is contained in the coating material when they are sintered in an atmosphere of a low oxygen partial pressure. In general, the particle of an oxide is finer and harder so that the powder of an oxide can be dispersed uniformly in a coating material. Moreover, the oxide particle also promotes the burning of the binder when it is deoxidized into the metal. The oxide particle has a function of inhibiting the deoxidation of the device as well. Consequently, the above-mentioned metals are preferably added in the form of an oxide so as to permit forming the more excellent outer electrode and a ceramic electronic part.

As is apparent from the above-mentioned explanation, a ceramic electronic part of the present invention has an inner electrode comprising Ni as a main metal component and an outer electrode which is attached to an outer side face of the ceramic electronic part. The above-mentioned outer electrode is a sintered body comprising a metal component comprising Ag and Cu as a main component and a glass component. The boundary between the outer electrode and inner electrode is formed with an alloy phase comprising Ni and Cu as a main component.

In addition, according to the present invention, the ceramic electronic part is manufactured by the following steps: the metal comprising Cu and Ag is employed as a main component for the outer electrode and the weight ratio of Ag:Cu is preferably made to be 3:7-9:1; the metal for an outer electrode is softened in an atmosphere of low oxygen partial pressure at the temperature of 500-800°C . As a result, an outer electrode is provided where an entire body is formed by an alloy phase comprising Cu-Ag as a main component and an alloy phase comprising Cu-Ni as a main component is formed at the boundary contacting with a Ni inner electrode. Consequently, the outer electrode can be sintered at a low temperature, thus the deterioration in the electric property due to the deoxidation of the ceramic component can be inhibited. Thus, the production cost of the outer electrodes can be reduced.

FIG. 1 is a cross sectional view showing an electrode structure of a capacitor using a ceramic of one embodiment of the present invention. More specifically, FIG. 1 schematically shows the bonding portion of the Ni inner electrode and the outer electrode.

FIG. 2 is an expanded sectional view of the part on which the mark "A" is written in FIG. 1 and shows an electrode structure of a capacitor using ceramic in one embodiment of the present invention.

FIG. 3 is an expanded sectional view of the applicable part of the part on which mark "A" is written in FIG. 1 and shows an electrode structure of a capacitor using ceramic of an alternative embodiment of the present invention.

The invention will be explained in detail with reference to the attached figures and the following examples. The examples are illustrative and should not be construed as limiting the invention in any way.

### Example 1

In order to examine the bonding condition (alloying condition) between the Ni inner electrode and the outer electrode of the present invention as a model, a metal coating material was formed by kneading 100 parts by weight of Cu powder having an average particle size of 0.5µm; 2 parts by weight of ethyl cellulose as a binder; and 30 parts by weight of terpineol as a solvent. Aside from this metal coating material, an alternative metal coating material was formed by kneading a mixture in which Cu powder having an average particle size of 0.5µm and Ag powder having an average particle size of 1µm were mixed at the ratio shown in Table 1 (the total amount of the mixture of Cu and Ag was 100 parts by weight); 2 parts by weight of ethyl cellulose as a binder; and 30 parts by weight of terpineol as a solvent. Then the material for the outer electrode was formed by the following steps: each coating material was applied onto a Ni metal foil and dried thereon; and the resulting coating film was sintered in an N₂ atmosphere of at temperatures of 500-750°C. In this example, N₂ gas had an oxygen partial pressure of 20-30ppm.

In order to examine the bonding condition between Ni and the outer electrode material after firing, the cross section of an alloy phase was observed by the use of the optical microscope. As a result, in the case of the material containing Ag, an alloy phase was clearly observed to be generated at a lower temperature. Moreover, as a result of an element analysis, the resulting alloy phase was recognized to comprise only Cu and Ni. The thickness of this alloy phase was shown in Table 1.

**Table 1**

| Thickness of an Alloy(µm) | | Weight Ratio of Ag (%) | | | | | | | |
|---|---|---|---|---|---|---|---|---|---|
| | | 0 | 1 | 10 | 30 | 50 | 70 | 90 | 99 |
| Temperature (°C) | 500 | - | - | - | 0.3 | 0.4 | 0.2 | 0.1 | - |
| | 600 | - | - | 0.1 | 0.5 | 1.2 | 0.4 | 0.2 | - |
| | 650 | - | - | 0.3 | 1.3 | 3.0 | 1.1 | 0.5 | - |
| | 700 | - | 0.2 | 0.7 | 2.4 | 4.2 | 2.3 | 1.2 | 0.1 |
| | 750 | 0.1 | 0.5 | 1.1 | 3.8 | 6.8 | 3.5 | 2.0 | 0.1 |
| (remark)- : below the lower limit for detecting | | | | | | | | | |

As is apparent from Table 1, although Cu and Ni were likely to form an alloy, in order to alloy only Cu powder with Ni film, a high temperature was needed. On the other hand, Ni and Cu could be alloyed even at a low temperature by adding Ag powder into Cu powder. In particular, in the case where Ag was contained in an amount of 30-90 weight % in the metal materials, an alloy could easily be formed and could observed at the low temperature of 500°C.

In this embodiment, the mixing powder of Cu powder and Ag powder was employed. The same result could be provided by using a powder of an Ag-Cu alloy, a powder of Cu on which Ag was coated and a powder of Ag on which Cu was coated.

### Example 2

In order to examine the bonding condition (alloying condition) between the Ni inner electrode and the outer electrode of the present invention as a model, a metal coating material was formed by kneading a powder containing only Cu powder having an average particle size of 0.5µm; ethyl cellulose as a binder; and terpineol as a solvent. Aside from this metal coating material, an alternative metal coating material was formed by kneading a mixture in which Cu powder having an average particle size of 0.5µm and Ag powder having an average particle size of 1µm were mixed at the predetermined ratio and Sn powder having an average particle size of 1µm was further mixed at the weight ratio 0.02 with respect to the total amount of the mixture of Cu and Ag; ethyl cellulose as a binder component; and terpineol as a solvent. In the same manner as Example 1, the coating material was sintered and formed on a Ni metal foil. In order to examine the bonding condition between Ni and the outer electrode material after firing, the cross section of an alloy phase was observed by means of an optical microscope. As a result, in the case where a material containing Ag and Sn was employed, an alloy phase was clearly observed to be generated at a lower temperature. Moreover, as a result of an element analysis, the resulting alloy phase was recognized to comprise Cu, Ni and Sn. The thickness of this alloy phase was shown in Table 2.

**Table 2**

| Thickness of an Alloy(µm) | | Weight Ratio of Ag (%) | | | | | | | |
|---|---|---|---|---|---|---|---|---|---|
| | | 0 | 1 | 10 | 30 | 50 | 70 | 90 | 99 |
| Temperature (°C) | 500 | - | - | 0.3 | 0.7 | 1.2 | 0.8 | 0.4 | 0.1 |
| | 600 | - | 0.2 | 0.6 | 1.2 | 2.2 | 1.5 | 0.8 | 0.3 |
| | 650 | - | 0.4 | 1.6 | 3.5 | 5.0 | 4.0 | 2.0 | 0.6 |
| | 700 | 0.2 | 0.8 | 3.0 | 5.5 | 8.5 | 6.0 | 3.5 | 1.0 |
| | 750 | 0.5 | 1.5 | 7.5 | 10.5 | 15.0 | 12.0 | 8.5 | 2.0 |
| (remark)- : below the lower limit for detecting | | | | | | | | | |

As is apparent from Table 2, although Cu and Ni were likely to form an alloy, in order to alloy a powder containing only Cu with Ni film, a high temperature was needed. On the other hand, an alloy comprising Ni and Cu as a main component can be provided even at a low temperature by adding Ag and Sn powder into Cu powder. Moreover, when compared with Example 1, an alloy could be more easily formed by adding Sn powder into Cu powder than when adding only Ag powder into Cu powder. In this case, an amount of Ag in the metal materials ranges widely from 1 to 99 weight %. Also an alloy could be observed at a low temperature of 500°C.

In this Example, the experiment where the weight ratio of metal component of Sn was controlled to be 0.02 with respect to the total amount of Ag and Cu was described, however, the same result could be observed when the weight ratio of Sn as the other component was 0.001 or more with respect to the total amount of Ag and Cu.

Moreover, in this embodiment, Sn was employed as the other metal component added into Cu and Ag. The same result could be provided and an alloy could be observed at a low temperature when a metal element which can alloy with Ag and Cu and of which the alloy with each of Ag and Cu has a melting point lower than each melting point of Ag and Cu is employed.

### Example 3

In order to examine the bonding condition (alloying condition) between the Ni inner electrode and the outer electrode of the present invention as a model, a metal coating material was formed by kneading a powder containing only Cu having an average particle size of 0.5µm; ethyl cellulose as a binder; and terpineol as a solvent. Aside from this metal coating material, an alternative metal coating material was formed by kneading a mixture in which Cu powder having an average particle size of 0.5µm and Ag powder having an average particle size of 1µm were mixed at the predetermined ratio and PbO powder were further mixed at the weight ratio of 0.005 (by Pb conversion) with respect to the total amount of Cu and Ag; ethyl cellulose as a binder; and terpineol as a solvent. In the same manner with Example 1, the coating material was sintered and formed on a Ni metal foil. In order to examine the bonding condition between Ni and a material for the outer electrode after firing, the cross section of an alloy phase was observed by the use of an optical microscope. As a result, in the case of the material in which Ag powder and PbO powder were added into Cu powder, an alloy phase was clearly observed to be generated at a lower temperature. Moreover, according to an element analysis, the resulting alloy phase was recognized to comprise only Cu and Ni. The thickness of this alloy phase was shown in Table 3.

**Table 3**

| Thickness of an Alloy(µm) | | Weight Ratio of Ag (%) | | | | | | | |
|---|---|---|---|---|---|---|---|---|---|
| | | 0 | 1 | 10 | 30 | 50 | 70 | 90 | 99 |
| Temperature (°C) | 500 | - | - | 0.1 | 0.4 | 0.8 | 0.6 | 0.2 | - |
| | 600 | - | - | 0.3 | 0.8 | 1.5 | 1.2 | 0.5 | - |
| | 650 | - | 0.3 | 1.0 | 2.0 | 4.0 | 3.0 | 1.5 | 0.5 |
| | 700 | - | 0.6 | 1.8 | 3.5 | 7.5 | 5.5 | 2.5 | 0.8 |
| | 750 | 0.1 | 1.2 | 4.0 | 6.5 | 13.0 | 9.5 | 5.5 | 1.8 |
| (remark)- : below the lower limit for detecting | | | | | | | | | |

As is apparent from Table 3, although Cu and Ni were likely to form an alloy, in order to alloy a powder containing only Cu with Ni film, a high temperature was needed. On the other hand, an alloy comprising Ni and Cu as a main component could be provided even at a low temperature by adding Ag powder and PbO powder into Cu powder. Moreover, when compared with Example 1, an alloy could be made more easily by adding PbO powder better than adding only Ag powder. In this case, the amount of Ag in the metal materials widely ranges from 1 to 99 weight %. Also an alloy could be observed at the low temperature of 500°C.

In this example, while the experiment where the weight ratio of metal component of PbO was controlled to be 0.005 (calculated as Pb conversion) with respect to the total amount of Ag and Cu was described, the same result could be observed when the weight ratio of PbO as the other metal oxide component was 0.001 or more (calculated as Pb conversion) with respect to the total amount of Ag and Cu.

In this Example, the experiment where PbO was employed as a metal oxide which was added into Cu and Ag was described. However, any other metal oxide, for example, a metal oxide of Bi, In, Sn or the like which can promote a firing of the binder and which deoxide itself could be employed. In this case, the same result could be provided and an alloy could be observed at a low temperature.

### Example 4

A metal coating material was formed by kneading 100 parts by weight of metal powder; 6 parts by weight of glass frit; 3 parts by weight of ethyl cellulose as a binder; and terpineol as a solvent. In this Example, for the metal powder, a powder containing either Cu powder having an average particle size of 0.8µm or Ag powder having an average particle size of 1.5µm, or the mixture of the above-mentioned Cu powder and Ag powder were mixed at a predetermined ratio was used. Moreover, for the other component, the coating material was made where SnO₂ powder having an average particle size of 0.5µm was mixed at the weight ratio of 0.01 (calculated as Sn conversion) with respect to the total amount of Ag and Cu. Moreover, in the same manner above, a coating material was also made where Zn powder having an average particle size of 1.0µm was mixed at the weight ratio of 0.01 with respect to the total amount of Ag and Cu.

An outer electrode was formed by applying and drying the above-mentioned metal coating material onto the edge of the device used for evaluation; and sintering thereof at the temperature of 650°C in an N₂ atmosphere. Herein, for the device for evaluation, a multilayer ceramic capacitor with multilayer ceramic capacitor with Ni inner electrode comprising barium titanate dielectric (F property, 0.1µF product, size: approximately 2.0mm x 1.25mm x thickness of 0.65mm) was employed. Moreover, as a comparative example, a metal powder was formed in the same manner as mentioned above except that a powder containing only Cu was used as a metal powder. An outer electrode was formed by applying and drying the metal coating material onto the edge of the device of the above-mentioned multilayer ceramic capacitor with Ni inner electrode, and sintering thereof at the temperature of 900°C in an N₂ atmosphere (N₂ gas had an oxygen partial pressure of 20-30ppm). Then, the capacitance of each sample was recognized as a parameter showing a bonding condition between Ni of the inner electrode and the outer electrode. The result was shown in Table 4.

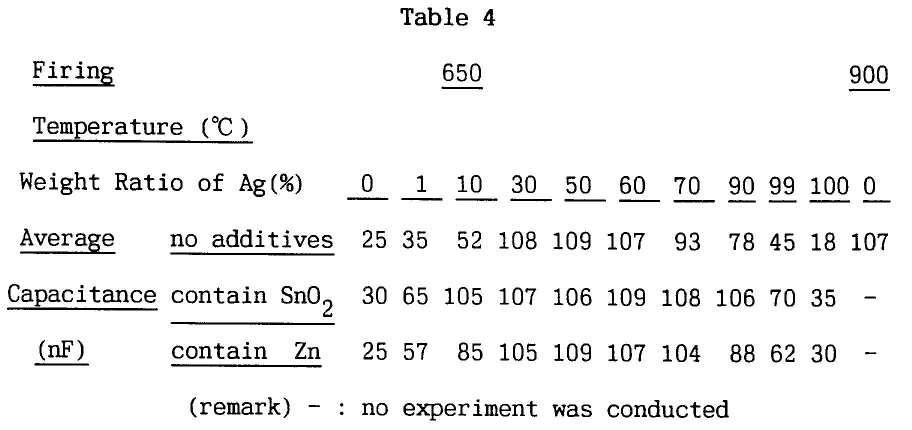

As is apparent from Table 4, in the sample where an outer electrode was formed by using a coating material containing only Cu powder or only Ag powder the joining between the Ni inner electrode and outer electrode was not good so that the capacitance could not be extracted sufficiently (extracting rate; 0-50%). On the contrary, an outer electrode was formed by using a coating material containing the mixture of Cu powder and Ag powder was joined with Ni of the inner electrode in a good condition and of the predetermined capacitance was extracted sufficiently. In particular, an outer electrode was formed by using a coating material containing Ag powder in an amount of 30-90 weight % joined with Ni of the inner electrode in an excellent joining condition. More particularly, in the case where a material containing Ag powder in an amount of 30-60 weight % was employed, a capacitance could be well extracted in all samples. In the case of the electrode which was obtained by sintering a coating material containing only Cu powder as a metal powder, when the firing temperature increased to 900°C, the extracting of capacitance was further improved (extracting rate; 95-100%, at least 80%).

Moreover, in the sample where the outer electrode was formed by adding a coating material containing SnO₂ powder as the other component in addition to the mixture of Cu powder and Ag powder, the joining between a Ni of an inner electrode and an outer electrode was improved and the predetermined capacitance was observed to be extracted. In particular, the outer electrode that was formed by using the material containing Ag powder in an amount of 1-99 weight % joined excellently. Above all, in the case of using the material containing Ag powder in an amount of 10-90 weight %, a capacitance was well extracted in all samples. Moreover, in each sample where the outer electrode was formed by using the coating material containing Zn powder in the mixture of Cu powder and Ag powder as the other material, the joining between Ni of an inner electrode and an outer electrode was improved and the predetermined capacitance was observed to be extracted. In particular, in samples using in the material containing Ag powder in an amount of 1-99 weight % had an excellent joining was obtained. More particularly, in the case of using the material containing Ag powder in an amount of 30-70 weight %, a capacitance was well extracted in all samples.

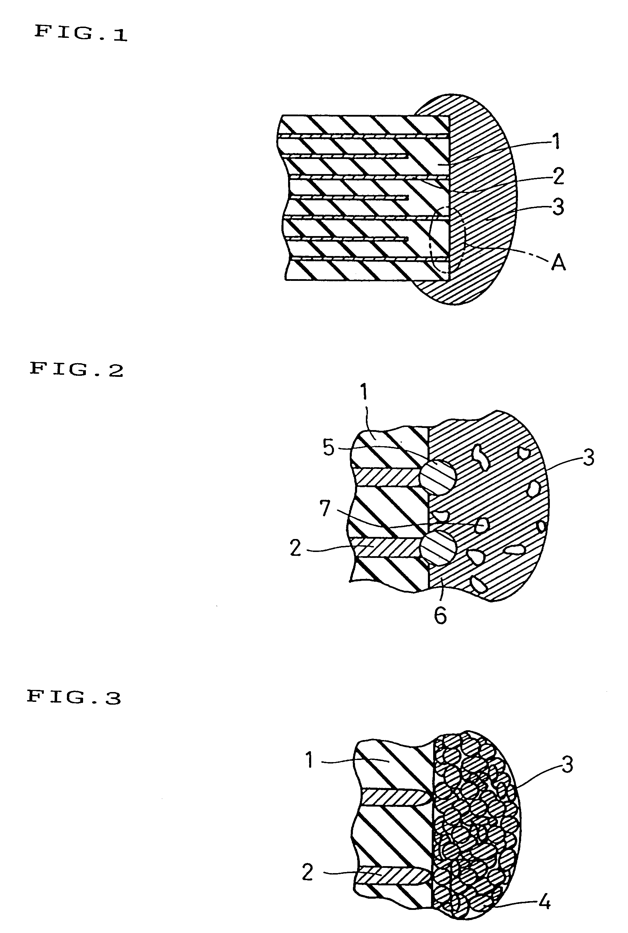

FIG. 1 shows the electrode structure of a capacitor using a ceramic of one embodiment of the present invention. More specifically, FIG. 1 is a cross sectional view showing the bonding portion between a Ni inner electrode and an outer electrode. In other words, FIG. 1 schematically shows a cross section of the joining condition of the Ni inner electrode and an outer electrode in the following samples of: a sample where an outer electrode was manufactured by sintering the coating film formed by a coating material containing only Cu powder as a metal powder; a sample where an outer electrode was manufactured by sintering a coating film formed by a coating material containing a mixture of Cu powder and Ag powder in which Ag powder was controlled to be in an amount of 50 weight % with respect to the total amount of the metal powder; and a sample where an outer electrode was manufactured by sintering the coating film formed by the coating material containing a mixture of Cu powder and Ag powder in which Ag powder was controlled to be in an amount of 50 weight % with respect to the total amount of the metal powder and SnO₂ powder was further added therein in an amount of 0.01 (calculated as Sn conversion) with respect to the total amount of Ag and Cu. FIG. 2 and FIG. 3 are expanded sectional views of the section on which mark "A" was written in FIG. 1. FIG. 2 shows an electrode structure of the capacitor of the following samples of: a sample where an outer electrode was formed by sintering a coating film manufactured by a coating material containing Ag powder in an amount of 50 weight % with respect to the total amount of the metal material at the temperature of 650°C; a sample where an outer electrode was manufactured by sintering a coating film formed by a coating material containing a mixture of Cu powder and Ag powder in which Ag powder was controlled to be in an amount of 50 weight % with respect to the total amount of the metal powder and SnO₂ powder was further added in an amount of 0.01 (calculated as Sn conversion) with respect to the total amount of Ag and Cu at a temperature of 650°C; and a sample where an outer electrode was manufactured by sintering a coating film formed by a coating material containing only Cu powder at the temperature of 900°C. FIG. 3 shows an electrode structure of a capacitor made by sintering a coating film formed by a coating material containing only Cu powder at the temperature of 650°C . In these figures, 1 shows a dielectric layer (a ceramic layer); 2 shows a Ni inner electrode; 3 shows an outer electrode; 4 shows Cu sintered powder; and 5 shows a Ni-Cu alloy phase or a Ni-Cu-Sn alloy phase (an alloy phase comprising Ni-Cu as a main component); 6 shows a Cu-Ag alloy phase or a Cu-Ag-Sn alloy phase (an alloy phase comprising a Cu-Ag as a main component) or Cu metal phase; and 7 shows a hole.

As shown in FIG. 3, in a sample where an outer electrode was manufactured by sintering a coating film formed by a coating material containing only Cu powder as a metal powder at the temperature of 650°C, the bonding condition between electrodes could not be observed. However, as shown in FIG. 2, in the sample where an outer electrode was manufactured by sintering a coating film of a coating material containing Ag powder in an amount of 50 weight % for the total amount of the metal powder at the temperature of 650°C, a Ni-Cu alloy phase was observed to grow between electrodes, that is, at the boundary face between the outer electrode 3 and the inner electrode 2. Moreover, in this case, a metallic bonding in the outer electrode was promoted better than the case of the coating film of coating material containing only Cu powder and the electric continuity was observed to be improved. Moreover, in the case where the outer electrode was manufactured by sintering a coating film formed by a coating material containing only Cu powder at the temperature of 900°C, the same alloying condition and the electric continuity could be obtained as the sample mentioned above.

Moreover, as shown in FIG.2, in the sample where the outer electrode was manufactured by sintering a coating film formed by a coating material containing SnO₂ powder as the other additive component in addition to the mixture of Cu powder and Ag powder at the temperature of 650°C, a Ni-Cu-Sn alloy phase was observed to grow between electrodes, that is, at the boundary phase between the outer electrode 3 and inner electrode 2. Also in this case, a metallic bonding in the outer electrode was promoted better than a case of the coating film of a coating material containing only Cu powder and the electric continuity was observed to be improved.

The structure of an outer electrode in which SnO₂ powder was added into the mixture of Cu powder and Ag powder was illustrated in this embodiment. However, in the case of using any metal element that alloys with Ag and Cu and of which the alloy with each of Ag and Cu has the melting point lower than each melting point of Ag and Cu, the same result could be obtained.

### Example 5

A metal coating material was obtained by kneading 100 parts by weight of a mixed powder comprising 50 weight % of Cu powder having an average particle size of 0.5µm, 42 weight % of Ag powder having an average particle size of 1.0µm, and 8 weight % of glass frit respectively for the total amount of the mixed powder; 3 parts by weight of ethyl cellulose as a binder component; and terpineol as a solvent. In the same manner as Example 4, an outer electrode was manufactured by the following steps: the resulting metal coating material was applied and dried on the edge of a device of multilayer ceramic capacitor with Ni inner electrode; and sintered thereof in an N₂ atmosphere (N₂ gas had 20-30ppm of oxygen partial pressure) at the temperature of 600°C. The same procedure was carried out at the temperature of 700°C and 800°C, making 100 samples of outer electrodes at each temperature. Then, accelerated life tests by loading a high voltage at high temperature were conducted on the obtained samples (300 samples) respectively. The tests were conducted by the following steps of: forming Ni-solder plate on the outer electrode of the sample; placing the sample on the predetermined substrate; and applying a voltage at DC250V at the temperature of 150°C. Moreover, as a comparative sample, the coating material was formed by the same manner as mentioned above except that a powder containing only Cu powder was used as a metal powder. An outer electrode was manufactured by applying the metal material on the edge of a device of multilayer ceramic capacitor with Ni inner electrode and dried thereon; and sintering at the temperature of 900°C in an N₂ atmosphere to make 100 samples of outer electrodes. The accelerated life tests by loading a high voltage at the high temperature were conducted on the obtained samples in the same manner as mentioned above.

The result was shown in Table 5, where the average life time (Hr) is the average hours over which each sample (device) was deteriorated and then a short-circuit was generated.

**Table 5**

| Sample | Firing Temperature(°C) | Average Life Time(Hr) |
|---|---|---|
| Cu-Ag | 600 | 55 |
| outer electrode | 700 | 37 |
| Product | 800 | 21 |
| Cu outer electrode | 900 | 10 |

As is apparent from Table 5, as the sintering temperature increased, the lifetime of the device became short. It is believed that the decrease in the lifetime was caused by the deterioration in the property due to deoxidation of the ceramic component. Consequently, as the sintering temperature was high, the deoxidation of the ceramic component of a device during the formation of an electrode by sintering was promoted and the device property was proved to be deteriorated. Thus, the superiority of sintering at the low temperature was proved.

### Example 6

A metal coating material was obtained by kneading 100 parts by weight of a mixed metal powder comprising 54 weight % of Cu powder having an average particle size of 0.5µm, 40 weight % of Ag powder having an average particle size of 1.0µm, and 6 weight % of glass frit with respect to the total amount of the mixed powder; 3 parts by weight of ethyl cellulose as a binder; a clay powder comprising montmorillonite that account for 5-50% in volume ratio to the metal material component (Cu powder and Ag powder); and terpineol as a solvent. In the same manner as Example 4, an outer electrode was manufactured by the following steps: the resulting metal coating material was applied on the edge of the device of multilayer ceramic capacitor with Ni inner electrode and dried; and sintered in an N₂ atmosphere (N₂ gas had 20-30ppm of oxygen partial pressure) at the temperature of 650°C . Then, the flexibility intensity tests was conducted on the obtained outer electrodes. This test was carried out in accordance with JIS C 6484 flexibility test. Moreover, as a comparative sample, the coating material was formed by the same manner as mentioned above except that a clay powder comprising montmorillonite was not added. An outer electrode was manufactured by applying the above-mentioned metal material on the edge of the above-mentioned device of multilayer ceramic capacitor with Ni inner electrode. The flexure intensity test was carried out on the obtained outer electrodes in the same manner as mentioned above.

As a result of the flexibility test, in the comparative sample of the outer electrode made by the coating materials in which clay powders comprising montmorillonite as a main component was not contained, when the substrate was warped by 3-5mm, the device was destroyed and a short-circuit was generated. On the other hand, in the comparative sample of the outer electrode made by the coating materials in which clay powders comprising montmorillonite as a main component was contained, destruction of the devices was not observed until the flexure was 10mm.

The reason why the destruction of the devices (an electronic part), caused by the flexure loaded on the substrate when the outer electrode was placed onto the substrate, could be inhibited by adding a clay powder comprising montmorillonite as a main component into the coating materials will be explained as follows. The clay powder comprising montmorillonite as a main component has a softening temperature at not less than 900°C, and disperses at random in the outer electrode without bonding with the other component such as metal component so that the clay powder retains its original particle shape. Consequently, when the stress is applied to the sample (an electronic part) due to the flexure of the substrate, a slight slide was generated at the boundary between the surface of the clay powder comprising montmorillonite as a main component and the other component comprising such as a metal. As a result, the plastic deformation was generated in an entire outer electrode and the flexure of the substrate was absorbed by this plastic deformation of the outer electrode, thus reducing the stress onto the sample (an electronic part).

Moreover, the same investigation was conducted on the other inorganic oxide particles having a softening temperature of not less than 900°C such as mica powder, titanium oxide powder, and copper oxide powder. As a result, the destruction of a sample (an electronic part) due to the loaded flexure was observed to be inhibited by using such powders. Moreover, both the clay powder comprising montmorillonite as a main component and mica powder had flake-shaped particles. So if such powder was added, the surface area was large and the continuity of the outer electrode was inhibited. When compared with a copper oxide or titanium oxide powder which were approximately spherical shaped particle, the sliding operation at the boundary face contacting to the above-mentioned other component such as metal component was observed. Thus, the degree of inhibiting destruction due to the flexure loaded on the substrate became large. Moreover, inorganic oxide can be employed by mixing two or more of the powders selected from clay powders comprising montmorillonite as a main component, mica powder, titanium oxide and copper oxide.

### Example 7

Under the condition of Example 5, a ceramic capacitor was obtained by sintering outer electrode (100 samples of outer electrode was sintered). The same procedure as Example 5 was followed except that the outer electrodes were sintered at the temperature of 600°C in an atmosphere of an oxygen partial pressure as follows.

The oxygen partial pressure in an atmosphere of N₂ gas was
(1) 50ppm; (2) 100ppm; (3)500ppm; (4)1000ppm; (5) 2000ppm.

The result is shown in Table 6, where the average capacitance (nF) is represented by the capacitance value at 1kHz and 1V.

**Table 6**

| No. | Oxygen Partial pressure in an atmosphere of N₂ gas (ppm) | Average capacitance (nF) | Variation of capacitance min-max (nF) |
|---|---|---|---|
| 1 | 50 | 104 | 100-110 |
| 2 | 100 | 106 | 102-108 |
| 3 | 500 | 103 | 98-108 |
| 4 | 1000 | 98 | 88-106 |
| 5 | 2000 | 50 | 20- 80 |

As is apparent from Table 6, when the oxygen partial pressure in an N₂ atmosphere was not more than 1000ppm, a practical product could be provided. Furthermore, when the oxygen partial pressure was not more than 500ppm, a capacitance could be extracted stably and stable products without variation in quality could be provided.

As described above, in the ceramic electronic part of the present invention the alloying operation of Cu and Ni was promoted by adding Ag into Cu which alloys with Ni and moreover, the degree of bonding was also improved. Furthermore, an alloying operation of Cu and Ni at a low temperature could be promoted by adding Ag, and a metal component which alloys with each of Cu and Ag and of which the alloy with each of Ag and Cu has lower melting temperature than each melting temperature of Ag and Cu into Cu. Therefore, a sufficient bonding between an outer electrode and an inner electrode can be provided at a low temperature. Moreover, the outer electrode which is stable in intensity and excellent in electric property and mechanical property can be provided without deteriorating the property of an electronic part. And yet, the electronic part of the present invention can be produced with low consumption of electric power.

## Claims

**1.** A ceramic electronic part having an inner electrode comprising Ni as a main metal component and an outer electrode which is attached to an outer side face of said ceramic electronic part,
wherein said outer electrode is a sintered body comprising a metal component comprising Ag and Cu as a main metal component and a glass component,
and has a boundary contacting to said inner electrode formed by an alloy phase comprising Ni and Cu as a main component.

**2.** The ceramic electronic part according to claim 1, wherein said outer electrode consists of Ag and Cu and has a boundary contacting to said inner electrode formed with an alloy phase consisting of Ni and Cu.

**3.** The ceramic electronic part according to claim 1, wherein said outer electrode comprises Ag and Cu as a main metal component and at least one metal component selected from metal components that alloy with each of Ag and Cu and of which the alloy with each of Ag and Cu has a melting point lower than each melting point of Ag and Cu as another component, and has a boundary contacting to said inner electrode formed with an alloy phase comprising Ni and Cu.

**4.** The ceramic electronic part according to claim 1, wherein said outer electrode comprises Ag and Cu as a main metal component and at least one metal component selected from metal components that alloy with each of Ag and Cu and of which the alloy with each of Ag and Cu has a lower melting point than each melting point of Ag and Cu as the other component, and has a boundary contacting said inner electrode formed with an alloy phase comprising Ni, Cu and said other components.

**5.** The ceramic electronic part according to claim 3 or 4, wherein said outer electrode comprises Ag and Cu as a main metal component and at least one component selected from the group consisting of Bi, Ce, Ga, In, Pb, Sn and Zn as the other component.

**6.** The ceramic electronic part according to claim 1, 3, 4 or 5, wherein the weight ratio of Ag to Cu in said outer electrode is in the range of 1:99 to 99:1.

**7.** The ceramic electronic part according to claim 2, wherein the weight ratio of Ag to Cu in said outer electrode is in the range of 3:7 to 9:1.

**8.** The ceramic electronic part according to any of claim 3 to 6, wherein the weight ratio of the metal component which is contained as the other metal component is not less than 0.001 with respect to the total amount of Ag and Cu.

**9.** The ceramic electronic part according to any of claim 1 to 8, wherein said sintered body of said outer electrode comprises inorganic oxide particle which is not bound to said metal component and which retains an initial particle shape from the time of mixing of particles.

**10.** The ceramic electronic part according to claim 9, wherein said inorganic oxide particle is flake-shaped.

**11.** The ceramic electronic part according to claim 10, wherein said flake-shaped inorganic oxide particle is at least one powder selected from the group consisting of mica powder and clay powder comprising montmorillonite powder as a main component.

**12.** A method for manufacturing a ceramic electronic part comprising an inner electrode containing Ni as a main component and an outer electrode which is attached to an outer side face of said ceramic electronic part, which comprises:
forming a coating film by applying a coating material comprising at least one metal powder selected from the group consisting of a metal powder in which Ag powder and Cu powder are mixed, a metal powder comprising a Cu-Ag alloy, a metal powder comprising Cu powder whose surface is coated with Ag, and a metal powder comprising Ag whose surface is coated with Cu; a glass frit; and an organic material for a binder onto the outer side face of said ceramic electronic part, and
firing said coating film at the temperature of 500-800°C in an atmosphere of a low oxygen partial pressure.

**13.** The method for manufacturing a ceramic electronic part according to claim 12, wherein said coating material contains at least one powder selected from the group consisting of metal powder and metal oxide powder containing at least one metal component selected from metal components that alloy with each of Ag and Cu and of which the alloy with each of Ag and Cu has lower melting point than each melting point of Ag and Cu as another additive.

**14.** The method for manufacturing a ceramic electronic part according to claim 13, wherein said coating material comprises at least one metal powder selected from the group consisting of Bi, Ce, Ga, In, Pb, Sn and Zn as the other additive.

**15.** The method for manufacturing a ceramic electronic part according to claim 13, wherein said coating material comprises at least one oxide powder of the metal selected from the group consisting of In, Bi, Sn and Pb as the other additive.

**16.** The method for manufacturing a ceramic electronic part according to any of claim 13 to 15, wherein the weight ratio of Ag to Cu in said metal powder is in the range of 1:99 to 99:1.

**17.** The method for manufacturing a ceramic electronic part according to claim 12, wherein the weight ratio of Ag to Cu in said metal powder is in the range of of 3:7 to 9:1.

**18.** The method for manufacturing a ceramic electronic part according to any of claim 13 to 16, wherein the weight ratio by metal conversion of the other metal component of at least one metal powder selected from the group consisting of a metal powder and a metal oxide powder which is added into said Ag and Cu is not less than 0.001 with respect to the total amount of Ag and Cu.

**19.** The method for manufacturing a ceramic electronic part according to any of claim 12 to 18, wherein said coating material comprises inorganic oxide particle having a softening point of not less than 900°C.

**20.** The method for manufacturing a ceramic electronic part according to claim 19, wherein said inorganic oxide particle is flake-shaped.

**21.** The method for manufacturing a ceramic electronic part according to claim 20, wherein said flake-shaped inorganic oxide particle is at least one powder selected from the group consisting of mica powder and clay powder comprising montmorillonite powder as a main component.

**23.** The method for manufacturing a ceramic electronic part according to claim 1 or 12, wherein said sintered body of said outer electrode comprises a metal component in an amount of 60-97 weight % and a glass component in an amount of 3-40 weight %.

**24.** The method for manufacturing a ceramic electronic part according to claim 1 or 12, wherein said inner electrode contains Ni in an amount of 90-100 weight % and another metal component in an amount of 0-10 weight %.

**24.** The method for manufacturing a ceramic electronic part according to claim 1 or 12, wherein said other metal component of said inner electrode comprises at least one metal selected from the group consisting of Fe, Co, Cu and Cr.

**25.** The method for manufacturing a ceramic electronic part according to claim 12 to 24, wherein an atmosphere of said low oxygen partial pressure at the time of firing of a outer electrode is not less than 0ppm and not more than 1000ppm.
